# EUROPEAN PATENT SPECIFICATION

(11) **EP 2 847 142 B1**
(45) Date of publication and mention of the grant of the patent: **07.07.2021**
(21) Application number: 13720391.5
(22) Date of filing: 03.05.2013
(51) Int. Cl.: C04B 35/185, C04B 35/195, F27D 3/12, C04B 38/00, F27D 5/00, C04B 111/00

(54) **CERAMIC COMPOSITIONS AND SUPPORTS FOR OBJECTS TO BE FIRED IN A KILN OR FURNACE**
KERAMIKZUSAMMENSETZUNGEN UND TRÄGER FÜR BRENNOBJEKTE IN EINEM OFEN
COMPOSITIONS CÉRAMIQUES ET SUPPORTS POUR OBJETS DEVANT ÊTRE CUITS DANS UN FOUR

(30) Priority: 11.05.2012 EP 12167713
(43) Date of publication of application: 18.03.2015
(60) Divisional application: 20187106.8
(73) Proprietor: IMERTECH SAS, 75015 Paris (FR)
(72) Inventor: WEBER, Monika, Josefa, 37671 Höxter (DE); SONNTAG, Andreas, 83512 Wasserburg am Inn (DE)
(74) Representative: Haseltine Lake Kempner LLP
(86) International application number: PCT/EP2013/059219
(87) International publication number: WO 2013/167477

(56) References cited:
- EP-A1- 0 455 451
- EP-A1- 2 088 134
- EP-A1- 2 415 511
- WO-A1-94/20789
- CN-A- 101 423 372
- DE-A1-102010 038 204
- Section 4.1.3.0 - 5.5 to 5.6.1: "Cordieritkeramik als Brennhilfsmittel"; "4.1.3.0" In: Jochen Kriegesmann: "Technische Keramische Werkstoffe", 1 February 2000 (2000-02-01), Fachverlag Deutscher Wirtschaftsdienst GmbH, Köln (DE), XP002679777, ISBN: 3-87156-091-X vol. 4, pages 34-46, Table 6 on page 39; Table 7 on page 40, Figure 16; Table 8, section 5.5.7.
- ANDREAS SONNTAG, ET.AL: "HCC Special (Imerys Kiln Furniture) Energy Saving Through Materials Development; Aptalite - A novel light weight cordierite designed for roofing tiles applications", CFI / BER. DKG 85 (2008) NO.1-2, 1 January 2008 (2008-01-01), pages E48-E55, XP002679778,
- HAASE W ET AL: "Hochwertige cordierit-Brennhilfsmittel fuer die Keramik", KERAMISCHE ZEITSCHRIFT, DVS VERLAG, DUESSELDORF, DE, vol. 48, no. 10, 1 January 1996 (1996-01-01), pages 904,907-911, XP009161064, ISSN: 0023-0561
- None

## Description

### FIELD OF THE INVENTION

The present invention relates to ceramic compositions for kiln furniture on the basis of compositions comprising mullite and cordierite. The invention further relates to methods of producing such ceramics as well as furniture items for a kiln or furnace made of such compositions. Examples of such items are supports such as H-cassettes and base members for supporting stacks of H-cassettes.

### BACKGROUND OF THE INVENTION

Supports for objects to be fired in a kiln or furnace are required to conform to a number of differing requirements. These requirements are dictated by both practical and economic considerations. The supports are required to have a high thermal shock resistance (TSR), and the ability to run through repeated high temperature cycles without significant performance and geometric changes. A further requirement is a high stability under mechanical load at elevated temperatures, also known as having a low high temperature creep (HTC). Furthermore, chemical stability at high temperatures is required. And finally the kiln furniture material needs to have sufficient mechanical strength (MOR) and stability under load in order to design complete and stable kiln furniture super-structures, such as stacks of H-cassettes.

In order to improve state of the art supports for use in kilns and furnaces, it is advantageous that one or more of the required properties mentioned above are adjusted according to a specific need. Oxide ceramics based on mullite, cordierite, alumina silicates, or composites thereof are commonly used in high temperature applications such as kiln furniture (H-cassettes) for the firing of roof tiles due to their relatively low production costs. State of the art oxide ceramic compositions for kiln furniture items may comprise one or more of cordierite, mullite, andalusite, corundum, spinell, cristoballite, quartz and an amorphous phase. Typical cordierite-mullite kiln furniture materials consist of various crystalline phases, and normally one or several amorphous phases. The interaction/interlocking of these phases and the resulting microstructure result in typical physical properties of the kiln furniture materials. The various crystalline phases have individual properties such as hardness, thermal expansion, heat conductivity, strength, elasticity, high temperature creep resistance, etc.

Mullite, corundum, AI-Mg-spinel and possibly to some extent andalusite are typically very high-temperature creep-resistant, due to their crystal structure and sliding planes. Amorphous phases, cordierite, quartz and cristoballite tend to have low creep resistance. However, the cordierite phase is important for a high thermal shock resistance, caused by its very low thermal expansion. It is therefore inherently difficult to reconcile the physical requirements of a ceramic for furniture in kilns and furnaces with its crystalline phase composition. Furthermore, amorphous phases start to soften once they reach their so-called transformation temperature which is typically at around 550 to 600°C. Cordierite-based ceramics for use in kiln furnature over several heating cycles ins already described in Section 4.1.3.0 - 5.5 to 5.6.1: "Cordieritkeramik als Brennhilfsmittel" (Jochen Kriegesmann: "Technische Keramische Werkstoffe", 1 February 2000 (2000-02-01), Fachverlag Deutscher Wirtschaftsdienst GmbH, Köln (DE) ISBN; 3-87156-091-X vol.4, pages 34-46). Furthermore, ceramic structures showing a high resistance to thermal shock, wherein the material is useful as a substrate for catalysts is provided by EP 0 455 451 A1. WO 94/20789 provides a combustor prepared from a silica-magnesia-alumina material for catalytically promoting thermal combustion. CN 101 423 372 A discloses tiles with thermal shock resistance, pressure resistance and acid resistance prepared from a ceramic composition based on corderite, mullite and corundum.

Another problem is that during the firing process, heating energy is required for heating all the contents of the kiln or furnace, including both the objects to be fired and the furniture itself. It is therefore desirable to reduce the mass of the furniture used as much as possible in relation to the mass of the objects to be fired. A reduced absolute or specific mass of cassettes leads to an increased energetic efficiency of the firing process. A way of reducing the mass has been described in WO 2009/077589 A1, which discloses a high stability, low density porous refractory material for kiln furniture objects comprising hollow spheres. However, compositions comprising hollow spheres are difficult to handle.

It is an aim of the present invention to provide an improved mullite-cordierite ceramic material for furniture items for a kiln or furnace.

### SHORT DESCRIPTION OF THE INVENTION

The present invention is defined in the appended claims.

In particular, the present invention relates to a ceramic having a phase composition comprising, based on the total weight of the ceramic, (a) 50 wt.-% to 60 wt.-% cordierite, (b) 20 wt.-% to 40 wt.-% mullite, and (c) andalusite and/or corundum in a combined amount of at least 1wt%, wherein the total combined amount of mullite, andalusite and corundum present in the ceramic is greater than 23 wt.%.

In an embodiment, the amount of mullite is from 20 wt.-% to 30 wt.-%. In a more specific embodiment, the amount of cordierite is from 50 wt.-% to 60 wt.-% and the amount of mullite is from 20 wt.-% to 30 wt.-%.

In another embodiment, the total combined amount of andalusite and corundum is of 3 wt.-% or more, or 5 wt.-% or more, or 7 wt.-% or more.

In another embodiment, the combined amount of mullite, andalusite and corundum is 25 wt.-% or more, or 30 wt.-% or more, or alternatively between 23 wt.-% and 45 wt.-%, between 28 wt.-% and 45 wt.-%, between 28 wt.-% and 32 wt.-%, or between 30 wt.-% and 32 wt.-%.

According to one aspect of the present invention, the weight ratio of mullite to cordierite may be between 0.2 and 0.95. In an embodiment, the said weight ratio is between 0.35 and 0.95, or between 0.5 and 0.95, or between 0.5 and 0.65, or between 0.55 and 0.6.

According to one aspect of the present invention, the ratio of the combined weight of mullite, corundum and andalusite to weight of cordierite may be between 0.2 and 1.2. In an embodiment, the said ratio is between 0.4 and 1.2, or alternatively between 0.3 and 0.4.

In a specific embodiment, the ceramic according to the present invention may have a density of 1.75 g·cm⁻³ or more, a combined amount of mullite, andalusite and corundum of 24 wt.-% or more, such as e.g. 25 wt.-% or more, a weight ratio of mullite to cordierite of between 0.4 and 0.95, and a ratio of the combined weight of mullite, corundum and andalusite to weight of cordierite of between 0.4 and 0.95. Alternatively, a weight ratio of mullite to cordierite may be between 0.4 and 0.75, and a ratio of the combined weight of mullite, corundum and andalusite to weight of cordierite between 0.4 and 0.75. In an alternative embodiment, the ceramics according to the present invention may have a density of between 1.45 g·cm⁻³ and 1.65 g·cm⁻³, a combined amount of mullite, andalusite and corundum of 20 wt.-% or more, a weight ratio of mullite to cordierite of between 0.3 and 0.55, and a ratio of the combined weight of mullite, corundum and andalusite to weight cordierite of between 0.3 and 0.65. Alternatively, a ratio of the combined weight of mullite, corundum and andalusite to weight cordierite may be between 0.3 and 0.55.

In one specific embodiment, the amount of coarse and medium grains in the bonding phase is reduced. The ceramic according to the present invention may be formed from raw materials having a particle size distribution having not greater than 5 wt.-% grains having a particle size of 150 µm or more, 35 wt.-% to 55 wt.-% grains having a particle size between 10 µm and 150 µm, and 45 wt.-% to 70 wt.-% grains having a particle size of 10 µm or less. In an embodiment, the raw materials have a particle size distribution having not greater than 1 wt.-% grains having a particle size of 150 µm or more, or even 0 %.

In an embodiment, the ceramic according to the present invention may be formed from starting materials having a weight ratio of talcum to alumina of 6 or less, or of 2.5 or less. In another embodiment, the ceramic according to the present invention may be formed from starting materials having a weight ratio of talcum to kaolin of 1.3 or less, or of 1.1 or less.

The ceramics according to the present invention may have a modulus of rupture (Young's Modulus) of greater than 24 MPa, or greater than 30 MPa, or greater than 35 MPa. They may have a thermal coefficient of expansion between 2.0 × 10⁻⁶ K⁻¹ and 3.5 × 10⁻⁶ K⁻¹, or between 2.5 × 10⁻⁶ K⁻¹ and 3.2 × 10⁻⁶ K⁻¹. They may have a high temperature creep (HTC) of 2.5 mm or less, of 2.0 mm or less, or of 1.5 mm or less.

The ceramics according to the present invention may have an open porosity of at least 25 %, more preferably at least 30 %, more preferably at least 35 %.

In one embodiment, the ceramics according to the present invention do not contain hollow spheres.

Also part of the present invention are furniture elements for kilns and furnaces, such as supports for use in kilns and furnaces made from the ceramics according to the present invention. These kiln furniture elements may e.g. be in the shape of H-cassettes for supporting ceramic bodies such as roofing tiles. Alternatively, they may be base members for supporting stacks of H-cassettes. Other kiln furniture items known to the skilled person in the art may also be formed from the ceramics according to the present invention.

The ceramic material of the invention includes a reduced HTC. A high HTC may lead to a minimisation of service life deformation while. At the same time, the provision of a ceramic material with a higher mechanical strength and stability may allow that the size of the items be reduced in order to improve stacking of kiln furniture items in a kiln. A higher strength and stability allows the use of downsized H-cassettes as used in the firing of roof tiles, since this would allow a higher packing density of the cassettes on the kiln cars. For example, one or two additional cassette layers may be stacked onto the same kiln car resulting in a higher firing capacity. Furthermore, it is preferable if the ceramic materials have a reduced specific mass in order to limit the heat absorbed by the ceramic materials during firing and to save on energy costs.

Also part of the present invention is a method for providing ceramic materials comprising the steps of providing raw materials suitable for the preparation of ceramics and one or more deflocculating agents, mixing the raw materials and deflocculating agents with a suitable liquid phase, slip casting the obtained mixture to produce green ceramic bodies and firing said green ceramic bodies to form ceramic bodies is also part of the present invention.

### SHORT DESCRIPTION OF THE FIGURES

The invention will be further illustrated by reference to the following figures:
- Fig. 1: shows a diagram comparing deformations of three kiln furniture cassettes (two of which according to the present invention) of various materials and sizes with respect to the number of firing cycles;
- Fig. 2: shows a diagram comparing deformations of five kiln furniture cassettes (four of which according to the present invention) of various materials and sizes with respect to the number of firing cycles;
- Fig. 3: shows a diagram comparing deformations of five kiln furniture cassettes (three of which according to the present invention) of various materials and sizes with respect to the number of firing cycles;
- Fig. 4: shows equipment for determining high temperature creep of a ceramic material according to the present invention;
- Fig. 5: shows equipment for determining the E-modulus of a ceramic material according to the present invention.

### DETAILED DESCRIPTION OF THE INVENTION

The present invention according to the appended claims provides for ceramic materials for use in kiln furniture items with improved properties compared to state of the art compositions. In particular, the values for high temperature creep (HTC), thermal shock resistance (TSR), mechanical strength (modulus of rupture, MOR), alone or in combination, were improved compared to the state of the art, while at the same time allowing the production of ceramics with low or reduced specific density.

### Measurement of ceramic properties:

The ceramic properties were measured according to the following methods:

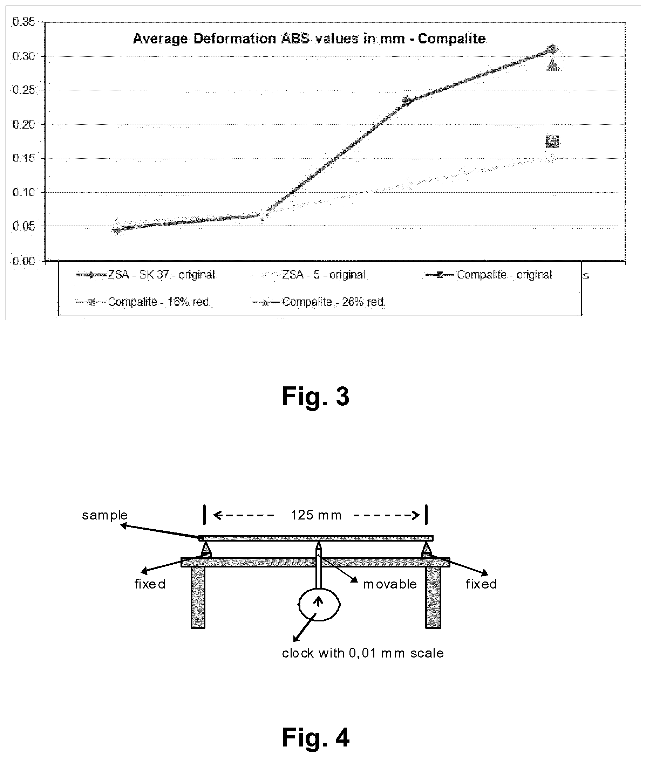

The ceramic materials of the present invention are characterised herein by the provision of data regarding the high temperature creep (HTC) behaviour of the material at 1200°C. These values are determined as follows: Samples having a length of 290 mm, a width of 20 mm, and a height of 10 mm are prepared. The samples are placed with each end on a support, the supports being 270 mm apart (span 270 mm). On top of the sample a load of 2.5 MPa is placed, located in the centre of the two downer supports. The actual load in grams is calculated for each piece on base of actual sizes of the sample bar. The samples supported over a span of 250 mm and loaded with 2.5 MPa are fired with a firing cycle characterized by a heating rate of 2°C/min, an end temperature of 1200°C, and a soaking time of 10 hours. The registered value is the difference in flatness of the sample before and after firing as "high temperature creep in mm". The equipment for determining high temperature creep is depicted in Fig. 4.

The thermal shock resistance of the ceramic materials of the present invention is determined as follows: Samples having a length of 290 mm, a width of 130 mm, and a height of 10 mm are prepared. Testing equipment is a common pilot burner, operated with a fixed gas-air ratio of 1:11 m³ₙ/h. The burner is started and run in on a flame temperature of 940°C. The flame temperature is checked with a Ni/Cr-Ni thermocouple. After reaching the required test temperature, the burner is run for 5 minutes under the same conditions. The flame temperature is checked again, and if stable, the test is started. The Sample is placed in a metal frame in horizontal position. Sample and frame are pivoted in horizontal position over the open flame. Final position of frame and sample assures the open flame to touch the sample in the centre. The distance between sample surface and upper rim of the burner tube is 95 mm. Measuring time starts with reaching the final position frame and sample over the open flame. Measuring time ends with the appearance of first visible cracks or breakage of the sample. Registration value is the time in seconds until visible cracks appear or breakage of the sample as "thermal shock resistance in seconds".

Phase analysis was executed with JEOL x-ray diffraction equipment, type JDX-8S, carried out by Szikkti Kft, Budapest. Phases were analyzed by using software XDB (powder diffraction phase analytical system).

Density and porosity and water absorption were determined according to MSZ EN 993-1.

Modulus of rupture (MOR) was measured on samples 125 × 20 × 10 mm with a fired surface as a 3-points bending test with a span of 100 mm and a load rate of 0.15 MPa/sec. Applied equipment was a METEFEM Bending Tester XP-01; type MH-1 / AS 102. The measurements were performed at a temperature of 20°C, and according to EN 993-6 (1999).

Thermal expansion (CTE) was measured according to EN 821-1 (1998), using a NIETZSCH dilatometer, type 402 PC at the laboratories of IKF Hungary. The sample size was 5 × 5 × 50 mm.

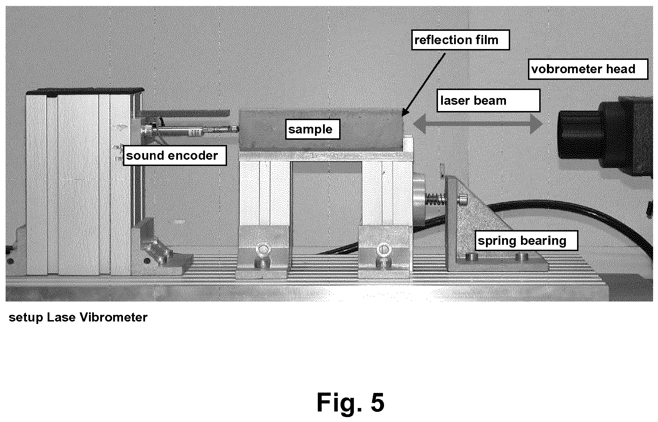

The E-modulus was determined by resonance frequency of transverse waves. For generating transverse weaves, the specimen is stimulated with a sound generator on one end, and the vibration is scanned by a laser beam on the opposite end. The stimulation of the sample took place with a signal of 0 to 100 Hz. The measured signals are running times of the laser beams, which are transformed by soft ware into frequency ranges. The equipment for determining the E-modulus is depicted in Fig. 5.

Sieving of coarse raw materials was carried out with standardized sieves, type RETSCH of mesh sizes according to the raw material, using SASKIA vibration sieving equipment, type THYR.

Analysis of grain size distribution of fine raw materials was done by CILAS type 715.

The ceramics according to the present invention differ from the prior art materials in particular by the fact that a small amount of andalusite and/or corundum is present in the materials, for example 1 wt.-% or more of andalusite and/or corundum.

### Minimisation of High Temperature Creep

Reduction of HTC was achieved for ceramics having the crystalline phases in the microstructure of state of the art kiln furniture materials, by increasing the total amounts of mullite, corundum and andalusite, while at the same time decreasing the cordierite amounts.

This was primarily achieved by adapting the raw material components during the bonding phase. These are typically components such as in clay, kaolinite, reactive alumina and talcum with grain sizes below 10 µm. In the sintering process, talcum and clay/kaolinite form cordierite whereas clay/kaolinite and alumina form mullite. Both high temperature reactions involve glass phase formations and crystallization processes.

Reaction talcum + kaolinite → cordierite + amorphous phase; and

Reaction kaolinite + Al₂O₃ → mullite + amorphous phase.

A further optional reaction is linked to the use of kyanite as a raw material components which disintegrate to mullite and at temperature typically of 1100 to 1500°C:

Reaction kyanite → mullite + silica.

The chemical composition of the amorphous phase can be adjusted by varying the non-reacted amounts of talcum, kaolinite and calcined alumina. For example, the amorphous phase can be enriched with alumina by adding excess alumina beyond the amount required for maximal crystallization of mullite. This results in free alumina in the bonding matrix and increases the transition temperature of the amorphous phase, resulting in improved HTC-rates.

Reduction of the talcum amount in favour of an increased alumina fraction proved to have a significant effect on the HTC-rates. A preferred weight ratio of talcum to Al₂O₃ is 6 or less, and a preferred weight ration of talcum to kaolin 1.3 or less. These ratios result in a considerable HTC reduction. In one embodiment, the weight ratios of talcum to Al₂O₃ are 2.5 or less, or 2.2 or less. In one embodiment, the weight ratios of talcum to kaolin are 1.1 or less. The HTC of the new mullite-cordierite ceramics according to the present invention can be reduced to 30 to 50 % of the HTC values of state of the art ceramics.

### Maintenance of Thermal Shock Resistance

At the same time, the amounts of cordierite were maintained at a sufficient level in order to assure proper TSR.

Key material parameters for high TSR are mechanical strength (MOR), thermal expansion (CTE), elastic Modulus (E) and thermal conductivity (λ). The so-called Rs-factor (MOR × λ)/(CTE × E) reflects these parameters as an indicative ratio. It is preferred to have a higher Rs-factor. Furthermore an in-house test procedure as mentioned above was used to assess the TSR.

Mechanical strength of the ceramics according to the present invention can be maintained by the reduction of the maximum grain sizes in order to keep interlocking between grains of various grain sizes high. On the other hand, the reduction of the cordierite phase with its specifically low CTE compromises the thermal shock resistance. Hence the increase of the CTE with higher mullite contents is compensated by higher MOR. An improved MOR can be more easily achieved than any beneficial changes in the E-modulus and/or thermal conductivity.

An increase in MOR is achieved for ceramics of a density < 1.75 g/cm³. The reduction or full removal of coarse grains of grain size of 150 µm or above in favour of the fraction of grains with medium grain sizes of 150 to 10 µm, together with the implementation of ratios of talcum to Al₂O₃ of 1.3 or below (see above) results in significant increases of the MOR of the mullite-cordierite ceramics according to the present invention of 40 to 60% compared to state of the art ceramics.

Without wishing to be bound to a theory, it is thought that the improved HTC and MOR are in part caused by the presence of excess Al₂O₃ in the starting material mixture, which is thought to cause a higher viscosity and an increase of the glass transition temperature of the amorphous phase of the ceramic, therefore increasing the mechanical stability of the material.

The advantages described herein are applicable to ceramics of any density, such as ceramics with a lower density of 1.45 to 1.65 g·cm⁻³, or ceramics with densities above 1.75 g·cm⁻³. Specific compositions for ceramics of various density ranges are disclosed herewith:

Mullite-cordierite materials with a density above 1.75 g/cm⁻³ may have a total combined content amount of mullite, corundum and andalusite above 25 wt.-%; a weight ratio of mullite to cordierite of between 0.45 and 0.75, or between 0.45 and 0.70; and a ratio of the combined weight of mullite, corundum and andalusite to weight cordierite of between 0.40 and 0.75, or between 0.40 and 0.70. In one embodiment, with the said phase composition, an increase of the mechanical strength to above 35 MPa, together with high thermal shock resistances may be achieved, if the raw starting materials have a composition of 35 to 55 wt.-% medium grains with particle sizes in the range of 10 µm to 150 µm, 45 to 70 wt.-% fine grains with particle sizes below 10 µm, and no grains with particle sizes above 150 µm. In a more preferred embodiment the particle sizes of the raw materials are 35 to 55 wt.-% medium grains with particle sizes in the range of 10 µm to 150 µm, 45 to 65 wt.-% fine grains with particle sizes below 10 µm, and no grains with particle sizes above 150 µm.

Mullite-cordierite materials with a density of 1.45 to 1.65 g·cm⁻³ may have a total combined content amount of mullite, corundum and andalusite above 20 wt.-%, or above 23 wt.-%; a weight ratio of mullite to cordierite of between 0.30 and 0.60, or between 0.30 and 0.55; and a ratio of the combined weight of mullite, corundum and andalusite to weight cordierite between 0.30 and 0.60, or between 0.30 and 0.60.

The typical shapes of the kiln furniture products used can be H-cassettes and U-cassettes, box saggars, plate saggars, batts, plates, cranks, posts, connecting kiln furniture elements and others to be suitable for the specific heat treatment processes. The products to be supported can typically be ceramic parts in the field of heavy clay products such as roof tiles, bricks, tableware, sanitary ware or other technical ceramics. The products to be heat treated at elevated temperatures can further include inorganic powders which need to undergo certain thermally activated reactions. The product can furthermore include metal- or glass components, which need to be heat treated for annealing or hardening purposes.

A method for providing ceramic materials is also part of the present invention. The method comprises the step of providing raw materials suitable for the preparation of ceramics and one or more deflocculating agents, mixing the raw materials and deflocculating agents with a suitable liquid phase, slip casting the obtained mixture to produce green ceramic bodies and firing said green ceramic bodies to form ceramic bodies. The method is characterised in that the raw materials comprise kaolin, talcum, alumina, and have a weight ratio of talcum to alumina of 6 or less, and a weight ratio of talcum to kaolin of 1.3 or less. In an embodiment, the weight ratio of talcum to alumina is 2.5 or less. In an embodiment, the weight ratio of talcum to kaolin of 1.1 or less.

In an embodiment the raw materials comprise no more than 5 wt.-% grains having a particle size of 150 µm or more; 35 wt.-% to 55 wt.-% grains having a particle size between 10 µm and 150 µm; and 45 wt.-% to 70 wt.-% grains having a particle size of 10 µm or less. In an embodiment the amount of raw materials having a particle size of 150 µm or more is not greater than 1 wt.-%, or 0 %.

### EXAMPLES

Ceramic materials were prepared according to processes known to the skilled person in the art, using relative amounts of raw materials as described in the Examples below. The solid raw materials suitable for the preparation of the ceramic materials according to the present invention (refractory phases of variable composition, ceramic bonding phases) may be employed in the form of powders, suspensions, dispersions, and the like, for the use according to the present invention. All applied raw materials are commercially available and known to the person skilled in the art.

Deflocculating agents used in the present invention are also all commercially available from various sources known to the person skilled in the art. Examples for deflocculating agents suitable for the purposes of the present invention include, but are not limited to sodium silicate, sodium polyacrylates, non-ionic or ionic tensides, which are typically used in the range of 0.001 wt.-% to 0.1 wt.-%, whereas 100 wt.-% refers to the total dry weight of the raw material. The amount of addition of the deflocculating agents depends on the type of selected deflocculant and the specific surface characteristics of the fine ingredients of the formulations, i.e. ball clay, talcum, reactive alumina and other optional components.

The preparation of formulations suitable for slip casting from the raw materials was performed according to methods and techniques known in the art. The raw materials were mixed in a conventional mixing machine with a shear plunger, under addition of a sufficient amount of a suitable liquid phase (water) and deflocculant. The slip properties were adjusted according to viscometric parameters to obtain a suspension suitable for slip casting. Slip casting into plaster moulds was performed using methods of traditional casting, high pressure casting, or low pressure casting to obtain green ceramic bodies for the manufacture of ceramic materials according to the present invention. A summary on the technology used is given in the textbook of W. Kollenberg (ed.), Technische Keramik, Vulkan-Verlag, Essen, Germany, 2004.

After de-moulding, cleaning and drying of the shaped products, they were fired in a kiln at temperatures of 1,340 to 1,400°C for 30 minutes to 10 hours.

The composition parameters of the various ceramic materials are shown in Table I:

**TABLE I: raw material compositions of various ceramics**

| | ZSA | ZSA II | ZSA V (ref.) | ZSA 19 (ref.) | Aptalite | Aptalite II | Aptalite III |
|---|---|---|---|---|---|---|---|
| Kaolin/Clay | 21.2 | 19.8 | 17.7 | 20.4 | 22.0 | 26.8 | 26.8 |
| Talcum | 26.5 | 25.9 | 18.8 | 21.7 | 28.7 | 23.0 | 23.0 |
| Calcined Alumina | 4.1 | 4.4 | 8.5 | 9.7 | 4.4 | 5.4 | 5.4 |
| Chamotte & Kyanite/Kerphalite (10 to 150 µm) | 16.1 | 26.2 | 39.9 | 48.2 | 21.2 | 21.2 | 21.2 |
| Chamotte (>150 µm) | 32.1 | 23.7 | 15.1 | none | 23.7 | 23.7 | 23.7 |
| Hollow spheres (<300 µm) | none | none | none | None | 8.6 | 8.6 | 9.6 |

The physical properties of the finished so-called as fired ceramic products obtained according to the above disclosure are shown in Table Ila. ZSA and aptalite are state of the art compositions not falling within the scope of the claimed invention, since they comprise less than 1 wt.-% of andalusite and/or corundum, and shown here for comparison with the materials according to the invention.

**TABLE Ila : physical properties and quantities of crystalline phases (materials as fired)**

| | ZSA | ZSA II | ZSA V (ref.) | ZSA 19 (ref.) | Aptalite | Aptalite II | Aptalite III |
|---|---|---|---|---|---|---|---|
| Water absorption (%) | 15.6 | 15.2 | 15.5 | 18.5 | 25.9 | 23.1 | 25.8 |
| Density (g·cm⁻³) | 1.85 | 1.88 | 1.92 | 1.79 | 1.53 | 1.61 | 1.54 |
| Porosity (%) | 28.9 | 28.6 | 29.7 | 33.1 | 39.7 | 37.0 | 39.7 |
| MOR (MPa) | 24.8 | 26.0 | 28.3 | 39.0 | 20.3 | 24.9 | 25.0 |
| CTE (× 10⁻⁶K⁻¹) | 2.58 | 3.10 | 3.26 | 3.18 | 2.50 | 2.73 | 2.78 |
| HTC (mm) | 3.52 | 1.45 | 0.84 | 1.10 | 4.77 | 2.23 | 2.10 |
| TSR (sec) | 117 | 126 | 120 | 110 | 130 | 1.24 | 110 |
| E-modulus (GPa) | 29.1 | 23.7 | | 34.3 | 22.9 | 20.2 | 20.2 |
| Rs-factor | 0.56 | 0.60 | | 0.56 | 0.45 | 0.60 | 0.57 |
| Cordierite (wt.-%) | 55.5 | 55.5 | 42.5 | 45.5 | 60.9 | 52.5 | 55.0 |
| Mullite (wt.-%) | 22.5 | 22.5 | 32.0 | 26.5 | 19.2 | 23.0 | 22.5 |
| Andalusite (wt.-%) | 0.0 | 0.0 | 5.0 | 0.0 | 0.9 | 1.5 | 1.0 |
| Corundum (wt.-%) | 0.0 | 1.5 | 4.0 | 5.0 | 0.0 | 1.5 | 2.0 |
| Spinell (wt.-%) | 2.6 | 2.5 | 2.0 | 2.5 | 3.0 | 2.0 | 2.0 |
| Cristoballite (wt.-%) | 2.4 | 2.5 | 1.5 | 3.5 | 2.8 | 2.5 | 2.0 |
| Quartz (wt.-%) | 0.3 | 0.5 | 0.5 | 2.0 | 0.6 | 1.0 | 0.5 |
| Amorph (wt.-%) | 16.8 | 15.0 | 12.5 | 15.0 | 12.4 | 16.0 | 14.5 |

Crystalline phase analysis of ZSA II and reference sample ZSA V, Aptalite II and Aptalite III and reference sample ZSA 19 (also called "Compalite") display free corundum and andalusite in their mineral phase analysis. The corundum and andalusite phases are thought to arise from calcined alumina and kyanite or kerphalite in the raw material composition, respectively. The measureable non reacted amounts of alumina and to certain extent of the andalusite (crystalline modification of kyanite) indicate a super-saturation of the amorphous glass phase with excess alumina above that needed to maximise mullite content. The andalusite is thought to originate from non-reacted kyanite/kerphalite, i.e., it represents remains from the high temperature reaction according to:

Reaction andalusite → mullite + silica

The amounts of the various components in the phase compositions shown in Table Ila give rise to the sum and ratio values as shown in Table IIb:

**TABLE IIb : relative quantities of crystalline phases (materials as fired)**

| | ZSA | ZSA II | ZSA V | ZSA 19 | Aptalite | Aptalite II | Aptalite III |
|---|---|---|---|---|---|---|---|
| Mullite + andalusite + corundum (wt.-%) | 22.5 | 24.0 | 41.0 | 31.5 | 20.2 | 26.0 | 25.5 |
| Ratio of mullite / cordierite | 0.41 | 0.41 | 0.75 | 0.58 | 0.32 | 0.44 | 0.41 |
| Ratio of (mullite + andalusite + corundum) / cordierite | 0.41 | 0.43 | 0.96 | 0.69 | 0.33 | 0.50 | 0.46 |

The data in Tables IIa and IIb demonstrates that the ceramic compositions according to the present invention have improved overall properties, when compared to the state of the art compositions. For example, all the compositions according to the present invention have higher or equivalent Rs-factors, compared to the state of the art materials: For the heavy compositions above 1.75 g·cm⁻³, ZSA II and ZSA 19 have values of 0.60 and 0.56 respectively, compared to 0.56 for ZSA. Also, for the lighter aptalite compositions, aptalites II and III have values of 0.60 and 0.57 respectively, compared to 0.45 for the state of the art material. There are also consistently improved values for modulus of rupture, thermal expansion and high temperature creep. It should be noted that ZSA 19, which was made without any particles having a grain size above 150 µm, displays the best values for MOR and HTC.

The TSR of the mullite-cordierite ceramics according to the present invention as measured by their Rs-factor shows that the thermal shock resistance is in line with that of state of the art materials. This stresses the excellent balance for the new mullite-cordierite ceramics according to the present invention, of MOR, E, CTE and λ to reliably keep their TSR at high levels.

The finished cassettes of the various materials were then tested for their performance when used in ceramic compositions for H-cassettes for firing roof tiles in kilns. The finished cassettes were tested in a roof tile factory using a kiln car of base surface of about 27.5 m² with standard size cassettes stacked 18 high. In this way, 6 × 4 × 18 = 1152 cassettes could fit into the kiln at each run, each cassette being loaded with a roof tile for firing. The roof tiles were fired at a temperature of 1,110°C, and the time period of each cycle was 14 hours from the initial cold phase to full cooling down at the end of the firing cycle. The firing temperature was chosen comparatively high, since H-cassettes tend to bend more strongly at higher temperatures. The bending of the cassettes was measured when new (straight after firing) and after 5, 50 and 100 firing cycles in three different positions. The different ceramic compositions evaluated in that way.

**TABLE IIIa: physical properties and quantities of crystalline phases (used materials after 100 cycles)**

| | ZSA | ZSA II | ZSA V (ref.) | ZSA 19 (ref.) | Aptalite | Aptalite II | Aptalite III |
|---|---|---|---|---|---|---|---|
| Water absorption (%) | 14.4 | 14.5 | 15.5 | 18.1 | 24.5 | 21.7 | 23.8 |
| Density (g·cm⁻³) | 1.89 | 1.90 | 1.91 | 1.82 | 1.57 | 1.65 | 1.57 |
| Porosity (%) | 27.2 | 27.5 | 29.5 | 32.9 | 38.3 | 35.5 | 37.4 |
| MOR (MPa) | 15.6 | 25.6 | 23.9 | 37.3 | 16.3 | 17.7 | 16.8 |
| CTE (× 10⁻⁶K⁻¹) | 2.30 | 2.94 | 3.09 | 3.63 | 2.59 | 2.87 | 2.74 |
| Cordierite (wt.-%) | 50.0 | 46.5 | 39.5 | 47.5 | 60.2 | 51.0 | 53.0 |
| Mullite (wt.-%) | 22.5 | 25.0 | 32.5 | 27.0 | 18.6 | 22.5 | 21.0 |
| Andalusite (wt.-%) | 0.0 | 0.0 | 4.0 | 0.0 | 1.3 | 3.7 | 2.5 |
| Corundum (wt.-%) | 1.0 | 2.5 | 1.5 | 5.0 | 0.3 | 2.3 | 2.0 |
| Spinell (wt.-%) | 2.0 | 1.8 | 2.0 | 2.0 | 3.7 | 2.2 | 2.5 |
| Cristoballite (wt.-%) | 8.0 | 8.0 | 6.5 | 7.5 | 7.7 | 8.2 | 10.0 |
| Quartz (wt.-%) | 0.5 | 1.7 | 3.0 | 1.0 | 0.3 | 1.3 | 2.0 |
| Amorph (wt.-%) | 16.0 | 14.5 | 11.0 | 10.0 | 7.9 | 8.8 | 7.0 |

**TABLE IIIb : relative quantities of crystalline phases (used materials after 100 cycles)**

| | ZSA | ZSA II | ZSA 5 (ref.) | ZSA 19 (ref.) | Aptalite | Aptalite II | Aptalite III |
|---|---|---|---|---|---|---|---|
| Mullite + andalusite + cordierite (wt.-%) | 23.5 | 27.5 | 38.0 | 32.0 | 20.2 | 28.5 | 25.5 |
| Ratio of mullite / cordierite | 0.45 | 0.54 | 0.82 | 0.57 | 0.31 | 0.44 | 0.40 |
| Ratio of (mullite + andalusite + corundum) / cordierite | 0.47 | 0.59 | 0.96 | 0.67 | 0.34 | 0.56 | 0.48 |

Table IIIa illustrates the changes in material properties of the cassettes after 100 cycles. Typically, MOR would be expected to drop as the number of heating cycles increases. Inventive compositions ZSA II, ZSA V (ref.), ZSA 19 (ref.), Aptalite II and Aptalie III all display an improved modulus of rupture after 100 cycles in comparison with the state of the art commercial materials ZSA and Aptalite. The MOR of ZSA II, ZSA V and ZSA 19 after 100 cycles is greater than the MOR of ZSA. Likewise, the MOR of Aptalite II and Aptalite III after 100 cycles is greater than the MOR of Aptalite.

It is thought that these changes in physical properties are linked to complex crystallisation processes during the high temperature cycling which are reflected in the mineral phase contents and mineral phase ratios as shown in table IIIb.

The relative changes of physical properties of kiln furniture material in use show increased durability of the materials, compared to the state of the art materials. Thus, the materials according to the present invention outperform state of the art commercial materials in service life, leading to prolonged lifetimes and rediuced costs for the end user.

Furthermore, cassettes with sizes reduced by 16% and 26% were also tested, in order to assess the potential for downsizing the cassettes to save on material and heating energy when firing.

Materials and sizes according to Table I were tested:

**TABLE IV: ceramics used for deformation measurements**

| Material | | standard size | reduced 16% | reduced 26% |
|---|---|---|---|---|
| ZSA | state of the art | YES | NO | NO |
| ZSA II | invention | YES | YES | NO |
| ZSA V | reference | YES | NO | NO |
| ZSA 19 | reference | YES | YES | YES |
| Aptalite | state of the art | YES | NO | NO |
| Aptalite II | invention | YES | YES | NO |
| Aptalite III | invention | YES | YES | NO |

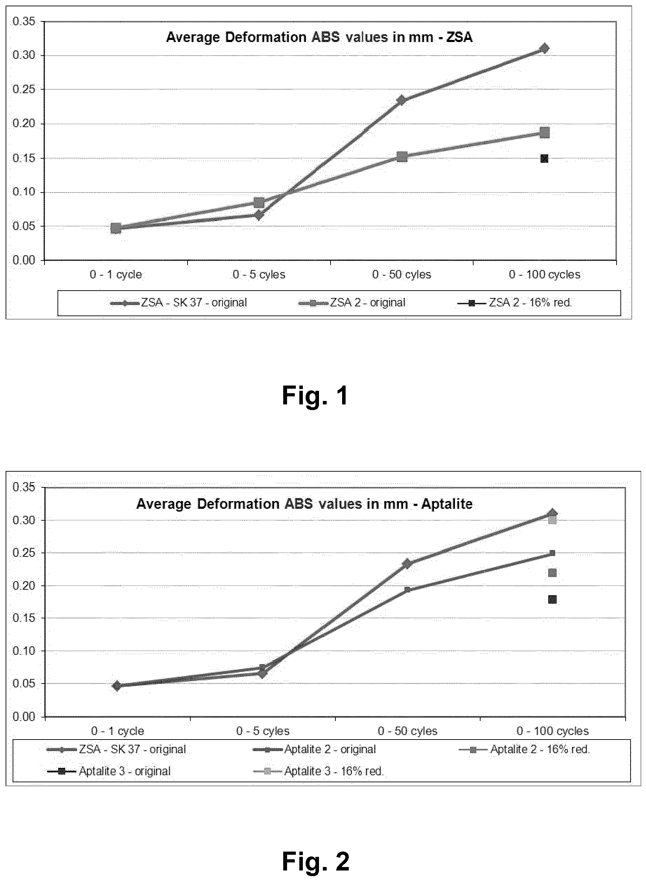

The results of the deformation measurements are shown in appended Figs. 1 to 3.

Fig. 1 shows that the deformation in mm of the test H-cassettes made of ZSA II in standard size, as well as when made of ZSA II with a volume reduced by 16 %, is significantly lower after 50 and 100 cycles, when compared to H-cassettes made of state of the art ZSA.

Fig. 2 shows that the deformation in mm of the test H-cassettes made of aptalites II and III, in both standard and 16 %-reduced sizes, is significantly lower after 50 and 100 cycles, when compared to H-cassettes made of state of the art ZSA.

Fig. 3 shows that the deformation in mm of the test H-cassettes made of ZSA 19 (ref.; termed "Compalite" herein) when used in standard size, or when used with 16 % and 26 %-reduced sizes, is significantly lower after 50 and 100 cycles, when compared to H-cassettes made of state of the art ZSA. Fig. 3 further shows the improved performance of standard sized cassettes made of ZSA V (ref.) compared to state of the art ZSA.

The measurements of the physical properties of the ceramics according to the present invention, as well as the improved behaviour when used as H-cassettes, show that the materials according to the invention represent a clear improvement compared to the state of the art materials.

## Claims

1. Ceramic having a phase composition comprising, based on the total weight of the ceramic:
(a) 50 wt.-% to 60 wt.-% cordierite;
(b) 20 wt.-% to 40 wt.-% mullite;
(c) andalusite and/or corundum in a combined amount of 1 wt.-% or more;
wherein the combined amount of the mullite and andalusite and corundum in the ceramic is 23 wt.-% or more.

2. Ceramic according to claim 1, having a ratio of the combined weight of mullite and corundum and andalusite to the weight of cordierite of up to 1.2.

3. Ceramic according to any of claims 1 to 2, which has:
a combined amount of mullite and andalusite and corundum of 24 wt.-% or more;
a weight ratio of mullite to cordierite of between 0.4 and 0.95; and
a ratio of the combined weight of mullite and corundum and andalusite to the weight of cordierite of between 0.4 and 0.95;
and wherein the ceramic has a density of 1.75 g·cm⁻³ or more.

4. Ceramic according to any of claims 1 to 2, which has:
a weight ratio of mullite to cordierite of up to 0.55; and
a ratio of the combined weight of mullite and corundum and andalusite to the weight of cordierite of up to 0.65;
and wherein the ceramic has a density of between 1.45 g·cm⁻³ and 1.65 g·cm⁻³.

5. Ceramic according to any one of the preceding claims, which has a Modulus of Rupture greater than 24 MPa and/or a thermal coefficient of expansion between 2.0 × 10⁻⁶ K⁻¹ and 3.5 × 10⁻⁶ K⁻¹.

6. Ceramic according to any one of the preceding claims, which has an open porosity of at least 25%.

7. Ceramic according to claims 1 to 3 and 5 to 6 which does not contain hollow spheres.

8. Method for preparing a ceramic of any one of claims 1 to 7, comprising the steps of:
(a) providing raw materials suitable for the preparation of ceramics and one or more deflocculating agents,
(b) mixing said raw materials and deflocculating agents with a suitable liquid phase,
(c) slip casting the obtained mixture to produce green ceramic bodies, and
(d) firing said green ceramic bodies to form ceramic bodies;
**characterised in that** the raw materials comprise kaolin, talcum, alumina, and have a weight ratio of talcum to alumina of 6 or less, and a weight ratio of talcum to kaolin of 1.3 or less.

9. Method according to claim 8, wherein the said raw materials comprise no more than 5 wt.-% grains having a particle size of 150 µm or more; 35 wt.-% to 55 wt.-% grains having a particle size between 10 µm and 150 µm; and 45 wt.-% to 70 wt.-% grains having a particle size of 10 µm or less.

10. Kiln furniture element comprising the ceramic of any one claims 1 to 7.

11. Kiln furniture element according to claim 10, which is a support for objects to be fired in a kiln, such as a H-cassette for supporting ceramic bodies such as roofing tiles, or which is a base member for supporting a stack of H-cassettes.

## Patentansprüche

1. Keramik mit einer Phasenzusammensetzung umfassend, auf Grundlage des Gesamtgewichts der Keramik,
(a) 50 Gew.-% bis 60 Gew.-% Cordierit;
(b) 20 Gew.-% bis 40 Gew.-% Mullit;
(c) Andalusit und/oder Korund in einer kombinierten Menge von 1 Gew.-% oder mehr;
worin die kombinierte Menge aus Mullit und Andalusit und Korund in der Keramik 23 Gew.-% oder mehr ist.

2. Keramik gemäß Anspruch 1, mit einem Verhältnis des kombinierten Gewichts aus Mullit und Korund und Andalusit zum Gewicht des Cordierits von bis zu 1,2.

3. Keramik gemäß irgendeinem der Ansprüche 1 bis 2, die hat
eine kombinierte Menge aus Mullit und Andalusit und Korund von 24 Gew.-% oder mehr;
ein Gewichtsverhältnis von Mullit zu Cordierit von zwischen 0,4 und 0,95; und
ein Verhältnis der kombinierten Menge aus Mullit und Korund und Andalusit zum Gewicht des Cordierits von zwischen 0,4 und 0,95;
und worin die Keramik eine Dichte von 1,75 g·cm⁻³ oder mehr hat.

4. Keramik gemäß irgendeinem der Ansprüche 1 bis 2, die hat
ein Gewichtsverhältnis von Mullit zu Cordierit von bis zu 0,55; und
ein Verhältnis des kombinierten Gewichts von Mullit und Korund und Andalusit zum Gewicht des Cordierits von bis zu 0,65;
und worin die Keramik eine Dichte von zwischen 1,45 g·cm⁻³ und 1,65 g·cm⁻³ hat.

5. Keramik gemäß irgendeinem der vorhergehenden Ansprüche, die eine Biegefestigkeit größer als 24 MPa hat und/oder einen thermischen Ausdehnungskoeffizienten zwischen 2,0 × 10⁻⁶ K⁻¹ und 3,5 × 10⁻⁶ K⁻¹ hat.

6. Keramik gemäß irgendeinem der vorhergehenden Ansprüche, die eine offene Porosität von mindestens 25% hat.

7. Keramik gemäß den Ansprüchen 1 bis 3 und 5 bis 6, die keine Hohlkugeln enthält.

8. Herstellungsverfahren für eine Keramik aus irgendeinem der Ansprüche 1 bis 7, umfassend die Schritte
(a) Bereitstellen von Rohstoffen, die geeignet sind für die Herstellung von Keramiken, und von einem oder mehreren Entflockungsmitteln,
(b) Vermischen der Rohstoffe und Entflockungsmittel mit einer geeigneten Flüssigphase,
(c) Schlickergießen des erhaltenen Gemischs zum Herstellen von Keramikgrünlingen, und
(d) Brennen der Keramikgrünlinge zum Bilden von Keramikkörpern;
**dadurch gekennzeichnet, dass** die Rohstoffe Kaolin, Talk, Aluminiumoxyd umfassen, und ein Gewichtsverhältnis von Talk zu Aluminiumoxyd von 6 oder weniger, und ein Gewichtsverhältnis von Talk zu Kaolin von 1,3 oder weniger haben.

9. Verfahren gemäß Anspruch 8, worin die Rohstoffe nicht mehr als 5 Gew.-% Körner mit einer Korngröße von 150 µm umfassen; 35 Gew.-% bis 55 Gew.-% Körner mit einer Korngröße zwischen 10 µm und 150 µm; und 45 Gew.-% bis 70 Gew.% Körner mit einer Korngröße von 10 µm oder weniger.

10. Ofenausstattungselement, umfassend die Keramik aus irgendeinem der Ansprüche 1 bis 7.

11. Ofenausstattungselement gemäß Anspruch 10, das ein Träger für in einem Brennofen zu brennende Gegenstände ist, wie eine H-Kassette zum Tragen von Keramikkörpern wie Dachziegeln, oder das ein Basiselement zum Tragen eines Stapels H-Kassetten ist.

## Revendications

1. Céramique avec une composition de phase comprenant, à la base du poids total de la céramique :
(a) 50% en poids à 60% en poids de cordiérite ;
(b) 20% en poids à 40% en poids de mullite ;
(c) de l'andalousite et/ou du corindon en une quantité totale d'1% en poids ou plus ;
dans laquelle la quantité combinée de la mullite et de l'andalousite et du corindon dans la céramique est 23% en poids ou plus.

2. Céramique selon la revendication 1, ayant un rapport du poids combiné de mullite et de corindon et d'andalousite par rapport au poids de la cordiérite de jusqu'à 1,2.

3. Céramique selon l'une quelconque des revendications 1 à 2, qui a :
une quantité combinée de mullite et d'andalousite et de corindon de 24% en poids ou plus ;
un rapport en poids entre la mullite et la cordiérite entre 0,4 et 0,95 ; et
un rapport entre le poids combiné de la mullite et du corindon et de l'andalousite par rapport au poids de la cordiérite entre 0,4 et 0,95 ;
et dans laquelle la céramique a une densité de 1,75 g·cm⁻³ ou plus.

4. Céramique selon l'une quelconque des revendications 1 à 2, qui a :
un rapport en poids entre la mullite et la cordiérite jusqu'à 0,55 ; et
un rapport entre le poids combiné de la mullite et du corindon et de l'andalousite par rapport au poids de la cordiérite de jusqu'à 0,65 ;
et dans laquelle la céramique a une densité entre 1,45 g·cm⁻³ et 1,65 g·cm⁻³.

5. Céramique selon l'une quelconque des revendications précédentes, qui a un Module de Rupture supérieur à 24 MPa et/ou un coefficient d'expansion thermique entre 2,0 × 10⁻⁶ K⁻¹ et 3,5 × 10⁻⁶ K⁻¹.

6. Céramique selon l'une quelconque des revendications précédentes, qui a une porosité ouverte d'au moins 25%.

7. Céramique selon les revendications 1 à 3 et 5 à 6 qui ne contient pas de sphères creuses.

8. Procédé de préparation pour une céramique d'une quelconque des revendication 1 à 7, comprenant les étapes de :
(a) fournir des matières premières appropriées à la préparation de céramiques et un ou plusieurs agents défloculants,
(b) mélanger lesdites matières premières et les agents défloculants avec une phase liquide appropriée,
(c) couler en barbotine le mélange obtenu pour produire des corps en céramique verte, et
(d) cuire lesdits corps en céramique verte pour former des corps céramiques ;
**caractérisé en ce que** les matières premières comprennent le kaolin, le talc, l'alumine, et ont un rapport en poids entre le talc et l'alumine de 6 ou moins, et un rapport en poids entre le talc et le kaolin de 1,3 ou moins.

9. Procédé selon la revendication 8, dans lequel lesdites matières premières comprennent non plus de 5% en poids de graines ayant une taille de particule de 150 µm ou plus ; de 35% en poids à 55% en poids de graines ayant une taille de particule entre 10 µm et 150 µm ; et de 45% en poids à 70% en poids de graines ayant une taille de particule de 10 µm ou moins.

10. Élément d'accessoire d'enfournement comprenant la céramique d'une quelconque des revendication 1 à 7.

11. Élément d'accessoire d'enfournement selon la revendication 10, qui est un support pour des objets à être cuits dans un four, comme des cassettes en forme de H pour supporter des corps céramiques comme des tuiles, ou qui est un élément de base pour supporter un empilement de cassettes en forme de H.
